# EUROPÄISCHE PATENTSCHRIFT

(11) **EP 0 562 501 B1**
(45) Veröffentlichungstag und Bekanntmachung des Hinweises auf die Patenterteilung: **30.10.1996**
(21) Anmeldenummer: 93104600.7
(22) Anmeldetag: 20.03.1993
(51) Int. Cl.: B01D 29/72, B01D 46/24, B01D 29/31

(54) **Halterung für röhrenförmigen Partikelfilter**
Support for tubular particle filter
Support pour filtre à particules tubulaire

(30) Priorität: 25.03.1992 DE 4209685
(43) Veröffentlichungstag der Anmeldung: 29.09.1993
(73) Patentinhaber: FORSCHUNGSZENTRUM JÜLICH GMBH, 52425 Jülich (DE)
(72) Erfinder: Heybutzki, Helmut, W-5170 Jülich (DE); Stechemesser, Horst, W-5172 Linnich-Tetz (DE); Renftle, Walter, W-5160 Düren (DE)

(56) Entgegenhaltungen:
- DE-A- 1 611 126
- DE-A- 2 433 969
- US-A- 3 025 233

## Beschreibung

Die Erfindung bezieht sich auf eine Halterung für röhrenförmige Partikelfilter, bestehend aus zwei das Filter an seinen Enden haltenden Fassungen, von denen zumindest eine eine als Zu- bzw. Ableitung für das Röhreninnere dienende Bohrung enthält und mit einer Befestigung, die bei eingebautem Filter vorgespannt ist, wobei eine Fassung eine dem entsprechenden Filterende zugewandte hohlkugelförmige Wölbung aufweist und das der Wölbung zugewandte Filterende in die hohlkugelförmige Wölbung hineingedrückt ist.

Eine solche Halterung ist aus der DE-A-2433969 bekannt.

Eine Halterung für röhrenförmige Partikelfilter ist aus der DE-OS 21 18 405 bekannt. Wie aus der Druckschrift hervorgeht, soll die Halterung so beschaffen sein, daß das Einsetzen des Filters oder der Filter bzw. der Filterpatronen in eine dafür vorgesehene Filteranlage auch für Laien möglich ist, ohne daß dabei Beschädigungen der Filter auftreten. Hierzu sind als Dichthütchen ausgebildete Fassungen, die zum Filter hin Dichtrippen aufweisen, auf der dem Filter abgewandten Seite mit einer kugelförmigen Fläche versehen. Außerdem ist eine den Dichthütchen zugewandte, schwenkbar aufsetzbare Zentrierplatte mit einer kalottenförmigen Ausnehmung vorgesehen. Beim Einsetzen der Filterpatronen werden die Dichthütchen mit den kugelförmigen Flächen in die kugelkalottenförmigen Ausnehmungen eingelegt. Die Filterpatronen sind dann starr - zusätzlich durch einen durch eine zentrale Bohrung der Filterpatrone geführten Zentralstab - befestigt. Lageveränderungen der Filterpatronen während des Betriebes, wie Winkelabweichungen oder laterale Abweichungen, würden zur Beschädigung der Patrone führen.

Ein röhrenförmiges Partikelfilter, für das eine Halterung vorzusehen ist, ist in der deutschen Patentanmeldung P 41 30 630 beschrieben und abgebildet. Es beteht aus porösem Siliciumcarbid und dient der Filterung dieselrußhaltiger Abgase, die durch die porösen Rohrwände in das Filterinnere eindringen und von dort durch die Stirnflächen des Rohres hindurch abgeleitet werden.

Ein derartiges Filter, das auch zur Filterung von flüssigen Medien eingesetzt werden kann, muß an seinen Enden durch zwei Fassungen so gehalten werden, daß Partikel in der flüssigen oder gasförmigen Phase nicht durch undichte Stellen zwischen Fassungen und Filter dringen. Diese Dichtigkeit darf weder durch thermische Materialveränderungen, verursacht z.B. durch heiße Abgase, noch durch fertigungs- oder montagebedingte Toleranzen, also durch Winkelabweichungen vom Konstruktionsplan, noch durch Änderungen am Filter während der Betriebsphase, wie thermische Materialveränderungen, verursacht durch heiße Abgase oder auch dynamische Lageveränderungen, wie Winkelabweichungen oder laterale Verschiebungen, gefährdet sein.

Es ist daher Aufgabe der Erfindung, eine kostengünstige, leicht handhabbare Halterung für röhrenförmige Partikelfilter zu schaffen, die die Dichtigkeit zwischen Fassungen und Filter auch bei auftretenden thermischen Spannungen, bei fertigungsbedingten Lageabweichungen oder dynamischen Lageveränderungen gewährleisten.

Diese Aufgabe wird durch die kennzeichnenden Merkmale des Anspruchs 1 gelöst. Die Federung der einen Fassung ist dabei so zu wählen, daß sie bei eingebautem Filter nicht nur thermisch bedingte Materialausdehnungen oder Winkelabweichungen, sondern auch laterale Lageveränderungen auffängt. Ggf. kann an der federnden Befestigung eine seitliche Begrenzung angebracht sein, die ein seitliches Ausweichen des Filterendes verhindert.

Durch die Federkraft hineingedrückt sitzt das entsprechende Röhrenende des Filters in der hohlkugelförmigen Wölbung der anderen Fassung. Die Kreisform des Filterendes in die Hohlkugelform hineingedrückt ergibt auch bei Winkelabweichungen, z.B. infolge einer Lateralverschiebung des Filters zwischen den Fassungen, einen stets dichten, gleichbleibenden Zusammenhalt zwischen Fassung und Filter. Dabei ist zu bedenken, daß nur eine relative Dichtigkeit, d.h. relativ zum porösen Filter, erforderlich ist.

Eine Bohrung zum Filterinneren hin ist selbstverständlich so klein zu wählen, daß ein mögliches Verrutschen des Filters die Zu- bzw. Ableitungsfunktion nicht beeinträchtigt.

Bei einer zweckmäßigen Ausführungsform der erfindungsgemäßen Halterung weist auch die federnd befestigte Fassung eine dem entsprechenden Filterende zugewandte Wölbung auf.

Das kennzeichnende Merkmal es Anspruchs 4 beinhaltet bei einer Fassung mit hohlkugelförmiger Wölbung eine vergrößerte Kontaktfläche zwischen Fassung und Filter. Dadurch wird der Durchgang an der Nahtstelle Fassung-Filter für die Partikel erschwert und die Dichtigkeit verbessert.

Die Ausführungsform gemäß dem kennzeichnenden Merkmal des Anspruchs 5 bewerkstelligt die vergrößerte Kontaktfläche ohne ein eigens für diesen Zweck angefertigtes Filter durch Verwendung eines Zwischenstücks. Weicht zudem das Ende des Filters fertigungsbedingt von der Kreisform ab und ist stattdessen z.B. oval geformt, so gleicht das Zwischenstück einen solchen Fehler besonders gut aus.

Die Wölbung kann zum entsprechenden Filterende hin konkav oder konvex sein. Dies gilt insbesondere auch für die Zwischenstücke.

Ist die Halterung mit dem Filter starken Vibrationen ausgesetzt, wie das beim Abgasfilter im Pkw oder Lkw der Fall ist, so muß auf mechanische Stabilität des Aufbaus geachtet werden. Bei Problemen dieser Art ist die Ausführungsform gemäß den kennzeichnenden Merkmalen des Anspruchs 6 von Vorteil. Ein solcher Aufbau ist zudem einfach in der Konstruktion und damit preiswert in der Herstellung.

Hinsichtlich der Aspekte mechanische Stabilität, Einfachheit der Konstruktion, preiswerte Herstellung bietet sich die Ausführungsform gemäß dem kennzeichnenden Merkmal des Anspruchs 7 an. Umständliche und teure Lösungen, wie der Einsatz eines Faltenbalgs zwecks Abgasführung, erübrigen sich damit.

Der Einsatz einer duktilen Dichtung gemäß Anspruch 8 verbessert die Dichtigkeit zwischen dem kritischen Übergang Filter-Fassung. Eine solche Dichtung ist zudem in der Lage, Unebenheiten auszugleichen. Bei der Materialwahl hinsichtlich der Dichtung ist auf Schmelzpunkte zu achten, die oberhalb den auftretenden Temperaturen liegen müssen.

Bei regenerierbaren Partikelfiltern gemäß den deutschen Patentanmeldungen P 41 30 630 und P 41 30 629 werden die sich auf der Filterfläche sammelnden Rußpartikel mittels Strom verglüht. Zweckmäßigerweise werden in einem solchen Fall die bestehenden Kontakte zwischen Fassungen und Filter zum Anlegen der Spannung an das Filter ausgenutzt.

Die Ausführungsform gemäß dem kennzeichnenden Merkmal des Anspruchs 9 ermöglicht es, den Strom unter Ausnutzung der Fassungen als elektrische Kontaktierung über das Filter zu leiten. Insbesondere bei hohen Stromstärken sind große Kontaktflächen zwischen Fassungen und Filter von Vorteil, da diese den ohmschen Widerstand verringern.

Duktile Dichtungen in Form von Gold-, Silber-, Aluminium- oder Graphitfolien gemäß Anspruch 10 sind Anforderungen wie bei der Dieselrußfilterung im Pkw oder Lkw gewachsen.

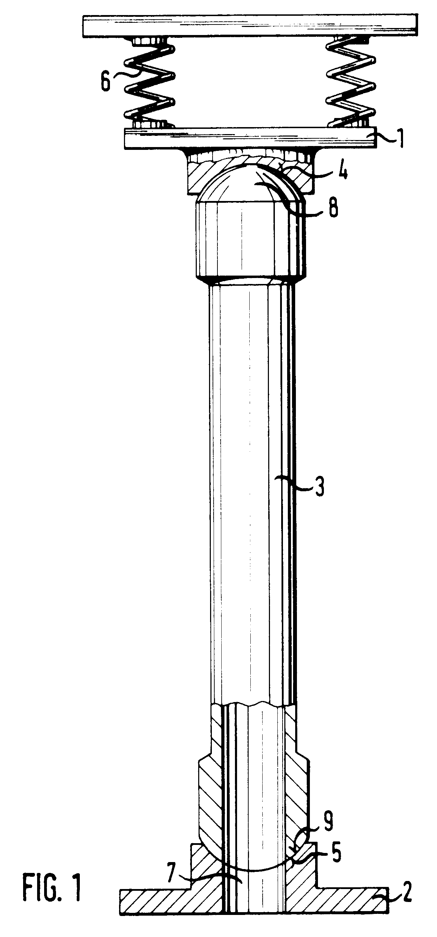

Die Figuren 1 - 7 verdeutlichen Ausführungsformen der erfindungsgemäßen Halterung mit Filter.

Figur 1 zeigt die zwei Fassungen 1 und 2, die das röhrenförmige Filter 3 an seinen Enden halten.

Fassung 1 ist federnd, Fassung 2 ist starr befestigt. Sowohl die starr als auch die federnd befestigte Fassung weist eine hohlkugelförmige Wölbung 4 bzw. 5 auf, in der das jeweilige Filterende sitzt. Die Federung 6 ist bei eingesetztem Filter durch diesen vorgespannt und sorgt für den festen Sitz des Filters. In der starr befestigten Fassung 2 befindet sich eine Bohrung 7, die zum Filterinneren führt.

Das abgebildete Filter 3 weist an seinen Stirnflächen 8 und 9 eine kugelförmige Wölbung auf, die an die Hohlkugelform 4 bzw. 5 angepaßt ist.

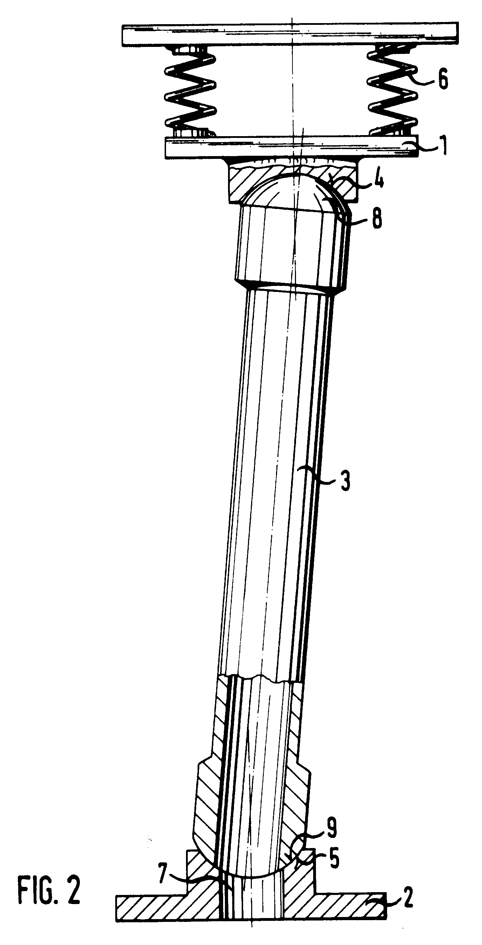

Figur 2 zeigt die Halterung gemäß Figur 1, jedoch mit montagebedingten Winkelabweichungen. Die Fassungen 1 und 2 sind gegeneinander versetzt befestigt. Infolgedessen tritt eine Lateralverschiebung des Filters 3 auf, d.h. das Filter sitzt unter einem gegenüber Figur 1 veränderten Winkel zwischen den Fassungen. Bedingt durch die hohlkugelförmigen Wölbungen 4 und 5 ist dennoch die erforderliche Dichtigkeit zwischen Rohrende und Fassungen für den Fall gewährleistet, daß die entsprechend zu dimensionierende Bohrung 7 ausschließlich die Verbindung zum Röhreninneren des Filters herstellt.

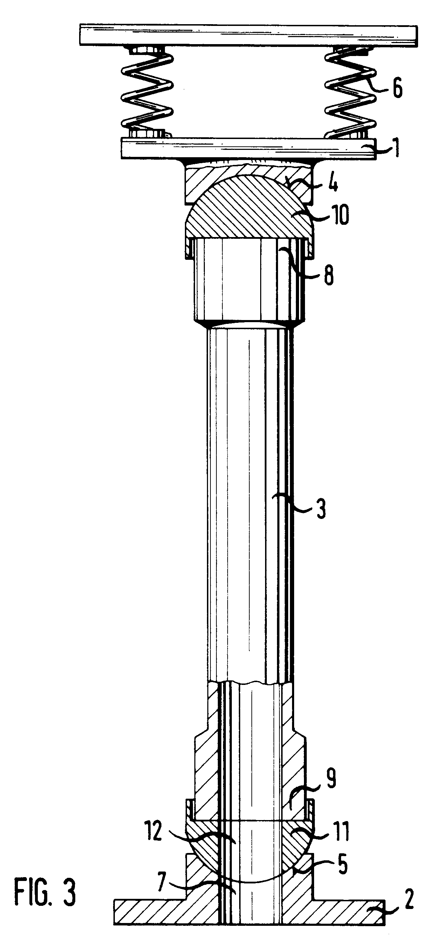

Figur 3 zeigt die Halterung gemäß Figur 1, jedoch mit Zwischenstücken 10 und 11 zwischen Fassungen und Filter und einem Filter, dessen Stirnflächen 8 und 9 in radialer Richtung planparallel sind. Die Zwischenstücke sind, auf seiten der Fassung an die Hohlkugelform angepaßt, kugelförmig gewölbt. Auf seiten des jeweiligen Filterendes sind sie als Gegenstück zum Filterende ausgebildet, d.h. sie weisen eine Aussparung auf, in der das jeweilige Filterende abdichtend sitzt.

Die Bohrung 7 in der starr befestigten Fassung 2 ist kompatibel zur Bohrung 12 in dem angrenzenden Zwischenstück 11, so daß eine Zu- bzw. Ableitung zum Röhreninneren trotz Zwischenstück 11 besteht.

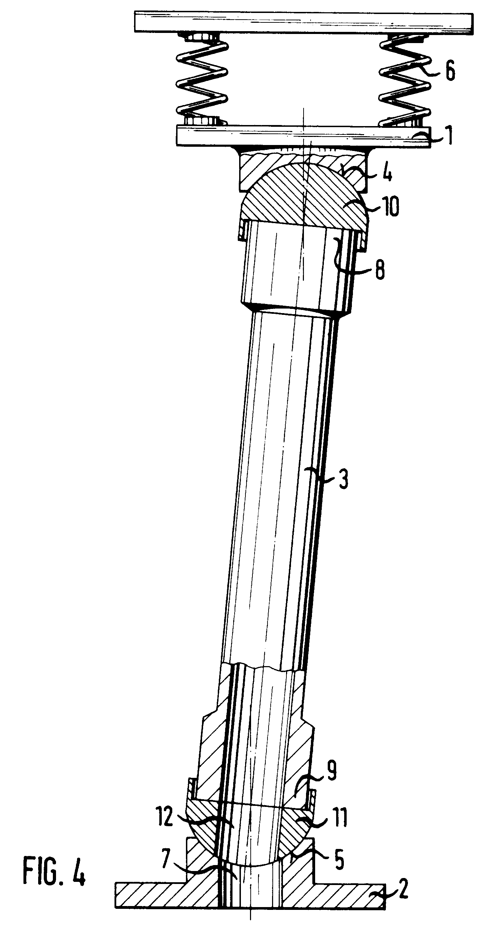

Figur 4 zeigt die Halterung gemäß Figur 3, jedoch mit montagebedingten Winkelabweichungen aufgrund gegeneinander versetzt befestigter Fassungen 1 und 2. Analog zu Figur 2 ist die Dichtigkeit zwischen Fassungen und Filter gewährleistet.

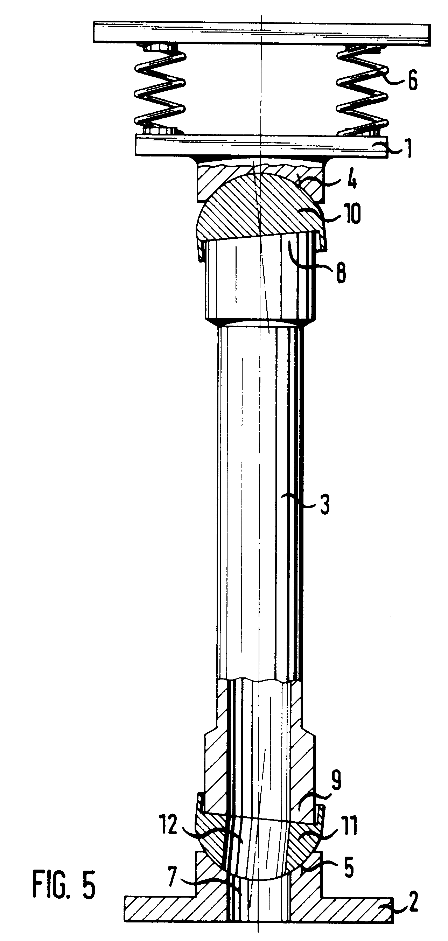

Figur 5 zeigt den Fall gemäß Figur 3, jedoch mit nicht zueinander parallelen Stirnflächen 8 und 9 der beiden Filterenden. Infolgedessen sitzen die Zwischenstücke 10 und 11 schief in den Fassungen 1 und 2. Analog zu Figur 2 bzw. 4 besteht dennoch Dichtigkeit an allen Übergangsstellen, also sowohl zwischen Fassung und Zwischenstück als auch zwischen Zwischenstück und Filterende.

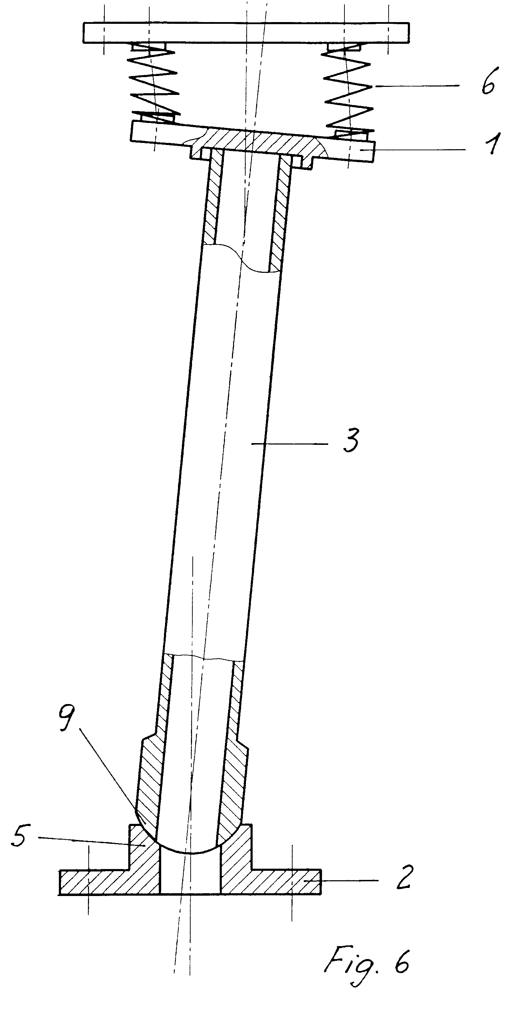

Figur 6 zeigt eine einfache Ausführungsform der Halterung, bei der lediglich Fassung 2, die der federnd befestigten Fassung 1 gegenüberliegende, eine hohlkugelförmige Wölbung 5 aufweist. Das an Fassung 1 anliegende Filterende ist offen und wird durch die Fassung 1 abgedichtet. Wie aus der Darstellung in Figur 6 hervorgeht, nimmt die Federung 6 sowohl axiale als auch laterale Lageveränderungen des Filters auf. Zur Stabilisierung kann zusätzlich eine - in der Zeichnung nicht dargestellte - seitliche Begrenzung vorgesehen sein. Diese kann beispielsweise aus einer an der Grundplatte (in der Zeichnung nicht mit einem Bezugszeichen versehen) angebrachten Hülse bestehen, die die Feder 6 umgibt.

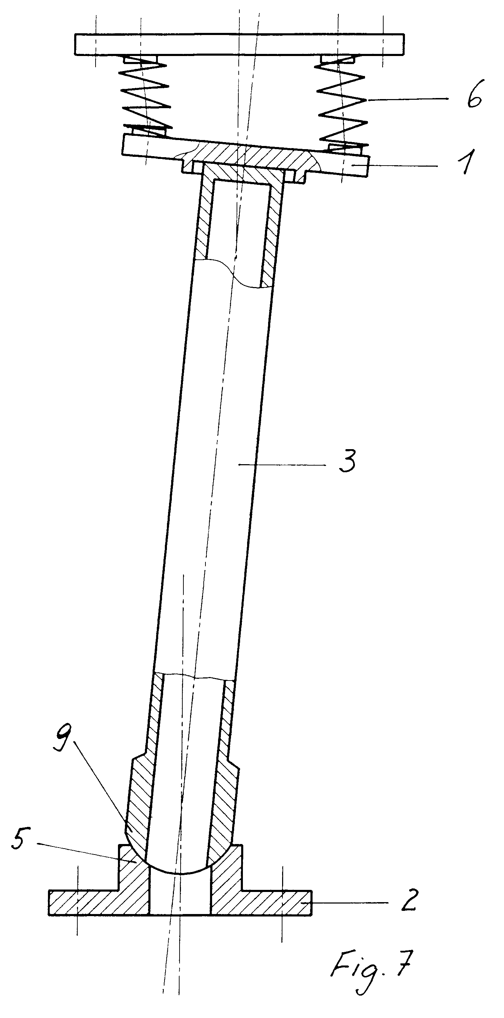

In Figur 7 ist die einfache Ausführungsform der Halterung gemäß Figur 6 dargestellt, jedoch mit dem Unterschied, daß das an Fassung 1 anliegende Filterende geschlossen ist, und die Fassung 1 daher das Filter nur zu halten, nicht aber abzudichten braucht.

## Patentansprüche

1. Halterung für röhrenförmigen Partikelfilter, bestehend aus zwei das Filter (3) an seinen Enden haltenden Fassungen (1, 2), von denen zumindest eine eine als Zu- bzw. Ableitung für das Röhreninnere dienende Bohrung (7) enthält, und mit einer Befestigung, die bei eingebautem Filter vorgespannt (6) ist, wobei eine Fassung (2) eine dem entsprechenden Filterende zugewandte hohlkugelförmige Wölbung (5) aufweist und das der Wölbung (5) zugewandte Filterende in die hohlkugelförmige Wölbung hineingedrückt ist,
**dadurch gekennzeichnet,**
daß dieser Fassung (2) eine federnd befestigte Fassung (1) gegenüberliegt.

2. Halterung nach Anspruch 1,
**dadurch gekennzeichnet,**
daß die federnde Befestigung (6) der einen Fassung (1) so ausgelegt ist, daß sie axiale und laterale Lageveränderungen des Filters aufnimmt.

3. Halterung nach Anspruch 1 oder 2,
**dadurch gekennzeichnet,**
daß auch die federnd befestigte Fassung (1) eine dem entsprechenden Filterende zugewandte Wölbung (4) aufweist.

4. Halterung ffür Partikelfilter nach Anspruch 1, 2 oder 3,
**dadurch gekennzeichnet,**
daß die Stirnfläche (8, 9) des in der hohlkugeligen Wölbung (4, 5) sitzenden Röhrenendes als Gegenstück ausgebildet an die Hohlkugelform angepaßt ist.

5. Halterung nach Anspruch 1, 2 oder 3,
**dadurch gekennzeichnet,**
daß ein zwischen Filterende und hohlkugelförmiger Wölbung einer Fassung (1, 2) lose sitzendes Zwischenstück (10, 11) vorgesehen ist, das auf seiten der Wölbung kugelförmig, auf seiten des Filters an das Filterende angepaßt ist und soweit vorhanden die Bohrung (7) in der Fassung (2) mittels kompatibler Bohrung (12) im Zwischenstück (11) zum Filterinneren hin fortgesetzt ist.

6. Halterung nach einem der Ansprüche 1 bis 5,
**dadurch gekennzeichnet,**
daß die der federnd befestigten Fassung (1) gegenüberliegende Fassung (2) starr befestigt ist.

7. Halterung nach Anspruch 6,
**dadurch gekennzeichnet,**
daß ausschließlich die starr befestigte Fassung (2) eine Bohrung (7) aufweist.

8. Halterung nach Anspruch 5, 6 oder 7,
**dadurch gekennzeichnet,**
daß sich zwischen Zwischenstück und Filterende eine duktile Dichtung befindet.

9. Halterung nach einem der Ansprüche 1 bis 8,
**dadurch gekennzeichnet,**
daß Fassungen (1 und 2), soweit vorhanden Zwischenstücke (10 und 11) sowie duktile Dichtungen aus elektrisch leitenden Materialien bestehen.

10. Halterung nach Anspruch 8 oder 9,
**dadurch gekennzeichnet**,
daß eine Silber-, Gold-, Aluminium- oder Graphitfolie als duktile Dichtung eingesetzt ist.

## Claims

1. Mounting for a tubular particle filter consisting of two holders (1, 2) holding the filter (3) at its ends, of which at least one includes a bore (7) serving for supply to or removal from the tube interior, and having an attachment which when the filter is installed is pre-loaded (6), a holder (2) having a spherically concave dome (5) facing the corresponding filter end, and the filter end facing the dome (5) being pressed into the spherically concave dome, characterised in that opposite this holder (2) there is disposed a resiliently attached holder (1).

2. Mounting according to claim 1, characterised in that the resilient attachment (6) of the one holder (1) is so arranged as to accommodate axial and lateral positional changes of the filter.

3. Mounting according to claim 1 or 2, characterised in that the resiliently attached holder (1) also has a dome (4) facing the corresponding filter end.

4. Mounting for a particle filter according to claim 1, 2 or 3, characterised in that the end surface (8, 9) of the tube end which is seated in the spherically concave dome (4, 5) is formed as a counterpart to match the spherical concave shape.

5. Mounting according to claim 1, 2 or 3, characterised in that an intermediate piece (10, 11) is provided loosely seated between the filter end and the spherically concave dome of a holder (1, 2), the intermediate piece being spherical at the side towards the dome and matching the filter end at the side towards the filter, and the bore (7) in the holder (2) insofar as it is present extending to the filter interior by way of a compatible bore (12) of the intermediate piece (11).

6. Mounting according to one of claims 1 to 5, characterised in that the holder (2) disposed opposite the resiliently attached holder (1) is itself attached rigidly.

7. Mounting according to claim 6, characterised in that only the rigidly attached holder (2) has a bore (7).

8. Mounting according to claim 5, 6 or 7, characterised in that a ductile seal is present between the intermediate piece and the filter end.

9. Mounting according to one of claims 1 to 8, characterised in that the holders (1 and 2), insofar as present the intermediate pieces (10 and 11) and the ductile seals consist of electrically conductive materials.

10. Mounting according to claim 8 or 9, characterised in that a layer of silver, gold, aluminium or graphite is used by way of ductile seal.

## Revendications

1. Support pour filtre tubulaire à particules, constitué de deux supports (1, 2) retenant les extrémités du filtre (3), dont l'un au moins comporte un perçage (7) servant de conduit d'alimentation et d'évacuation pour l'intérieur du tube, et avec une fixation qui est précontrainte (6) lorsque le filtre est monté, l'un des supports (2) comportant une partie bombée sphérique creuse (5) orientée en direction de l'extrémité correspondante du filtre, et l'extrémité du filtre orientée vers la partie bombée (5) étant enfoncée dans la partie bombée sphérique creuse, caractérisé en ce qu'un support (1) fixé de façon élastique est situé en face de ce support (2).

2. Support selon la revendication 1,
caractérisé en ce que la fixation élastique (6) de l'un des supports (1) est conçue de telle sorte qu'elle absorbe des variations axiales et latérales de la position du filtre.

3. Support selon la revendication 1 ou 2,
caractérisé en ce que le support (1) fixé de façon élastique comporte également une partie bombée (4) orientée vers l'extrémité correspondante du filtre.

4. Support pour filtre à particules selon l'une des revendications 1, 2 ou 3,
caractérisé en ce que la face frontale (8, 9) de l'extrémité du tube logée dans la partie bombée sphérique creuse (4, 5) est réalisée en tant qu'élément antagoniste adapté à la forme sphérique creuse.

5. Support selon l'une des revendications 1, 2 ou 3,
caractérisé en ce qu'on prévoit une pièce intermédiaire (10, 11) qui est logée de façon mobile entre l'extrémité du filtre et la partie bombée sphérique creuse d'un support (1, 2), qui est sphérique du côté de la partie bombée, adaptée à l'extrémité du filtre du côté du filtre, et en ce que le perçage (7), pour autant qu'il soit prévu dans le support (2), est prolongé vers l'intérieur du filtre au moyen d'un perçage (12) compatible pratiqué dans la pièce intermédiaire (11).

6. Support selon l'une quelconque des revendications 1 à 5,
caractérisé en ce que le support (2), situé en face du support (1) fixé de façon élastique, est fixé de façon rigide.

7. Support selon la revendication 6,
caractérisé en ce que seul le support (2) fixé de façon rigide comporte un perçage (7).

8. Support selon la revendication 5, 6 ou 7,
caractérisé en ce qu'un joint ductile est prévu entre la pièce intermédiaire et l'extrémité du filtre.

9. Support selon l'une quelconque des revendications 1 à 8,
caractérisé en ce que les supports (1 et 2), les pièces intermédiaires (10 et 11), pour autant qu'elles soient prévues, ainsi que des joints ductiles, sont en matériaux électriquement conducteurs.

10. Support selon la revendication 8 ou 9,
caractérisé en ce qu'une pellicule en argent, or, aluminium ou graphite est utilisée en tant que joint ductile.
